**Europäisches Patentamt**

**European Patent Office**

**Office européen des brevets**

(19)

(11) Veröffentlichungsnummer : **0 275 275 B1**

(12) **EUROPÄISCHE PATENTSCHRIFT**

(45) Veröffentlichungstag der Patentschrift :
**20.05.92 Patentblatt 92/21**

(21) Anmeldenummer : **87904530.0**

(22) Anmeldetag : **14.07.87**

(86) Internationale Anmeldenummer :
**PCT/EP87/00379**

(87) Internationale Veröffentlichungsnummer :
**WO 88/00696 28.01.88 Gazette 88/03**

(51) Int. Cl.⁵ : **G01N 21/77, G01N 33/543**

(54) **CHEMOSENSOR.**

(30) Priorität : **17.07.86 DE 3624120**
**03.11.86 DE 3637379**

(43) Veröffentlichungstag der Anmeldung :
**27.07.88 Patentblatt 88/30**

(45) Bekanntmachung des Hinweises auf die
Patenterteilung :
**20.05.92 Patentblatt 92/21**

(84) Benannte Vertragsstaaten :
**AT BE CH DE FR GB IT LI LU NL SE**

(56) Entgegenhaltungen :
**EP-A- 0 120 203**
**EP-A- 0 144 713**
**EP-A- 0 234 928**
**WO-A-86/07149**
**DE-A- 3 429 562**
**US-A- 3 905 767**
**US-A- 4 558 012**

(56) Entgegenhaltungen :
**OPTICS LETTERS, Bd. 9, Nr. 4, April 1984;**
**Optical Society of America (New York, US), K.**
**TIEFENTHALER et al.: "IntegratedOptical**
**switches and gas sensors", pages 137-139,**
**see page 137; figs. 1-3**
**PATENT ABSTRACTS OF JAPAN; Bd. 10, Nr.**
**68, (P-437) (2125), 18 März 1986;& JP-**
**A-60209149**

(73) Patentinhaber : **PROSUMUS AG**
**Elektronisch-mechanische Geräte**
**Greifenseestrasse 60**
**CH-8603 Schwerzenbach (CH)**

(72) Erfinder : **WERNER, Ralph, A.**
**Stockenstr. 3**
**CH-8802 Kilchberg (CH)**
Erfinder : **MORAN, Julio, R.**
**Vordergüt 30**
**CH-8704 Herrliberg (CH)**

(74) Vertreter : **Hiebsch, Gerhard F., Dipl.-Ing.**
**Erzbergerstrasse 5A Postfach 464**
**W-7700 Singen 1 (DE)**

## Beschreibung

Die Erfindung betrifft einen Chemosensor zum selektiven Nachweis zumindest einer Substanz mittels einer selektiven Schicht an einem Substrat.

Insbesondere in der Praxis der technischen Chemie und in der Biotechnologie nimmt die Nachfrage nach Chemosensoren zu, welche beispielsweise durch die geeignete Kombination eines selektiven Systems mit einem Empfänger od. dgl. ein der Konzentration einer definierten Substanz proportionales Meßsignal erzeugen und es so ermöglichen, Veränderungen aufzunehmen und in meßbare, insbesondere auch verstärkbare elektrische Größen umzusetzen.

Durch die DE-A-3429562 ist ein Gassensor mit einer Einrichtung bekannt geworden, durch welche die Lichtabsorption geändert wird. Diese Einrichtung ist als Laminat aus einem Metall, das Wasserstoffgas und das Gas einer Wasserstoff enthaltenden Verbindung adsorbiert und dissoziiert, sowie einer festen Verbindung ausgestaltet, die durch in dem Metall gebildete Wasserstoffatome unter Änderung seiner Lichtabsorption reduziert wird; eine Änderung der Lichtabsorption der festen Verbindung als Folge der Reduktion durch Wasserstoffatome wird gemessen.

Die EP-A-0120203 offenbart eine Vorrichtung zum Nachweis von gasförmigen Verunreinigungen in Luft mittels eines Gassensors aus einem optisch transparenten Gel mindestens eines Metalloxids, das bei Einwirkung von reduzierenden oder oxidierenden Gasen eine Änderung seines optischen Absorptions- und/oder Reflexionsspektrums erfährt, wobei das Gel eine Porosität zwischen 5 Vol.-°% und 80 Vol.-°% aufweist.

Schließlich beschreibt die US-A-4558012 eine Detektionseinrichtung -- und ein Verfahren, das mit nicht-monochromatischem Licht arbeitet -- zur Messung der Konzentration einer chemischen Substanz. Ein Licht absorbierendes Substrat wird von dielektrischen Schichten überlagert, auf denen eine das Meßgut tragende selektive Schicht ruht. Je nach Reaktion zwischen Messgut und selektiver Schicht ergeben sich unterschiedliche Reflexions- bzw. Interferenzmuster, sobald die Einrichtung von oben mit nichtmonochromatischem Licht angestrahlt wird. Der selektive Stoff sitzt hier nicht nur an der Oberfläche oder ist von einem Gel überdeckt, wobei keine Wellenleitung als Meßprinzip zur Anwendung kommt, sondern Reflexion, verbunden mit möglichen Interferenzerscheinungen.

Diese Einrichtung eignet sich nicht für monochromatisches Licht (insbesondere Laserlicht). Die Einrichtung bzw das Verfahren ist hochempfindlich nur innerhalb der Gruppe von Verfahren, welche mit nicht-monochromatischem Licht arbeitet.

In Kenntnis dieses Standes der Technik hat sich der Erfinder das Ziel gesetzt, ein Nachweisverfahren mit einem Chemosensor sowie letzteren selbst zu schaffen, mit dem die bisher bekannten Meßmöglichkeiten erheblich erweitert werden. Auf den Einsatz von Markierungsstoffen kann verzichtet werden.

Zur Lösung dieser Aufgabe führt die Lehre nach Patentanspruch 1; weitere vorteilhafte Ausgestaltungen sind den abhängigen Ansprüchen zu entnehmen.

Die selektive Schicht ist ein dünner wellenleitender Film einer Dicke unter 50 μm aus einer selektiven, permeablen Matrix, in welcher durch selektive Wechselwirkung der Reaktonspartner die optischen Eigenschaften der Welle veränderbar sind, wobei die Selektivität der Matrix durch homogene Dotierung mit dem entsprechenden, spezifischen organishen Reactionspartner gegeben ist. Gemäß einer Ausführungsform soll in dem Substrat an dem die selektive Schicht angebracht werden soll, ein Einschnitt mit einer Ausdehnung von 100 Mikron une kleiner zur Aufnahme der selektiven, permeablen Matrix vorgesehen sein.

Im Rahmen der Erfindung liegt es nun zum einen, daß in der selektiven Schicht die Welle geführt ist, deren optische Charakteristika durch Diffusion der gasförmigen, flüssigen und/oder festen Substanz, auch in Lösungen und Gasen, veränderbar sind, wobei eine interferometrische Anordnung vorgesehen ist. Nach einer anderen Ausführung -- bei der ebenfalls die optischen Charakteristika der in der selektiven Schicht geleiteten Welle durch Diffusion der gasförmigen, flüssigen und/oder festen Substanz, auch in Lösungen und Gasen, veränderbar sind -- weist die selektive Matrix ein Beugungsgitter auf, bis zu dem oder von dem aus die Welle geführt ist.

Die Brechzahl der Matrix ist hier vorteilhafterweise größer als die Brechzahl des Substrates.

Durch die Einführung der selektiven Matrix als wellenleitendem Film wird das Spektrum der Messungsmöglichkeiten aufgabengemäß erheblich verbessert; nicht nur die bevorzugten Streuungs- bzw. Fluoreszenzmessungen, sondern auch Intensitäts-, Polarisations-, Beugungs- und Interferenzmessungen werden in einfacher Weise möglich. Letztere können gar erst durch die Einführung der selektiven Matrix in besonders wirtschaftlicher Weise realisiert werden.

Darüber hinaus können Empfindlichkeit und Geschwindigkeit des Meßverfahrens erhöht werden, da die Wechselwirkung direkt im Wellenleiter und nicht nur auf dessen Oberfläche stattfindet.

Der Erfindungsgegenstand ermöglicht direkte Meßverfahren, d. h. man benötigt keine der üblichen Markierungen wie Fluoreszenz- oder Enzymemarkierungen bei einfachsten Anordnungen. Außerdem entstehen universelle Einsatzmöglichkeiten: Messungen auch in Flüssigkeiten und Gasen.

Die Miniaturisierung der Meßanordnung bewirkt:

. dank hoher Spezifität und Empfindlichkeit einen sparsamen Umgang mit teueren Reagenzien;

. es werden nur kleinste Probenvolumina benötigt (da Wechselwirkung direkt im Wellenleiter stattfindet ist der optische Weg für eine Meßreaktion bei weitem größer als bei anderen Anordnungen, wo zum Beispiel nur an den Reflexionspunkten im Bereich der Eindringtiefe spezifische Reaktionen ablaufen); dies ermöglicht den Einsatz hochreiner Reegenzien in wirtschaftlicher Weise (z. B. verschiedene Antigenproteine), welche die Empfindlichkeit der Ergebnisse für die Diagnostik wesentlich erhöht;

. nebst den in vitro-Anordnungen können insbesondere invasive Sensoren im Bereich der Humandiagnostik realisiert werden;

. es lassen sich in wirtschaftlicher Weise Einwegsensoren realisieren.

Nach der Erfindung kann zudem die selektive Matrix ein Beugungsgitter aufweisen.

Erfindungsgemäß erfolgt eine Reaktion bzw. eine Folgereaktion der zu messenden Substanz/en mit dem selektiven organischen Reaktionspartner in oder auf der selektiven Matrix und dadurch eine Änderung bestimmter physikalischer Eigenschaften, beispielsweise der optischen Dicke bzw. des Brechungsindex in der Matrix bzw. der Phase, der Polarisation, der Intensität am Strahl. Die Veränderungen durch molekulare Anlagerungen, molekulare Umlagerungen und/oder Umsetzungen werden durch Messen der physikalischen Eigenschaften erfaßt, nachdem die selektive Matrix mit dem die zu messende Substanz enthaltenden Medium in Wechselwirkung getreten ist.

Durch die Einführung der selektiven Matrix gemäß vorliegen- der ErFindung direkt in den Wellenleiter werden eine Reihe von bekannten Problemen vermieden, z. B. Kopplung zur Sensorfläche, Abdeckung des nicht sensovischen Teiles der Fläche, Herstel lung der Masken, licht-/Energieverluste u. a.. Es lassen sich in besonders einfacher Weise Interferometer vom Typ Michelson, bzw. Mach-Zehnder realisieren, indem die selektive Matrix mittels Stirnkopplung in den Strahlengang gebracht wird. In diesem Falle muß der Brechungsindex der selektiven Matrix nicht größer sein als jener der Umgebung.

Die Zu- bzw. Abführung des Lichtrahls kann mittels planaren Wellenleitern erfolgen, die entweder als dünne Filme auf ein Substrat aufgetragen oder mittels Ionenbeschuß vorgezeichneten Wegen im Substrat integriert sind; im letzteren Fall bewirkt die Beschießung vom Substrat mit z. B. Sauerstofflonen einen erhöhten Brechungsindex, welcher die Zu- bzw. Abführung des lichtes zur/von der selektiven Matrix gewährleistet.

Von besonderer Bedeutung ist ein Substrat, in welches erfindungsgemäß Einschnitte -- bevorzugt V-, U- oder rechteckförmigen bzw. polygonen Querschnitts -- qeringer Ausmaße von weniger als 100 Mikron eingefügt werden und dann selektive Matrix aufnehmen. Überschüssige Matrix kann durch einfaches Abstreifen entfernt werden, was die Handhabung sehr vereinfacht.

Im Rahmen der Erfindung eignet sich für das Substrat bevorzugt $SiO_2$, dies insbesondere in kristalliner Form.

Werden die erwähnten Einschnitte auf der ganzen Substratlänge angebracht, so kann die Einkopplung mittels Glasfasern -- bzw. die Auskopplung -- besonders leicht erfolgen, indem diese in die Einschnitte hineingelegt und festgehalten werden.

Das bekannte Fabry-Perot Interferometer läßt sich besonders gut mit einem der erwähnten Einschnitte realisieren: man nimmt zwei Glasfaserstücke, von denen eines von einer Lichtquelle kommt und das andere zu einem Detektor führt, deren beide freie Enden sehr sauber und plan sein müssen, da sie allenfalls mit einer halbdurchlässigen Si1leroder Aluminium-Schicht versehen werden. Die so beschichteten Enden werden in jenen Einschnitt eines Substrat-Teilchens gelegt und so zusammengeschoben, daß der Abstand in der Regel weniger als einen Millimeter beträgt. Dadurch entsteht eine kleine Kavität, in welche nun die selektive Matrix eingebracht werden kann. Beim Fabry-Perot Interferometer braucht der Brechungsindex der selektiven Matrix nicht unbedingt größer als derjenige des Substrats zu sein. Die Glasfasern werden mit Vorteil so ausgewählt, daß das System im Monomode betrieben werden kann.

Es hat sich gezeigt, daß hochempfindliche Interferenzanordnungen eigentlich erst durch die Integration der Selektivität in den Wellenleiter in wirtschaftlicher Weise realisiert werden können; dies trifft vor allem da zu, wo die Dimensionen der selektiven Matrix klein sind (kleiner als 1 mm).

Der erfindungsgemäße Chemosensor wird insbesondere für die Diagnostik und verwandte Zwecke eingesetzt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt jeweils in schematisierter Wiedergabe und Schnittbildern in

Fig. 1 bis 4: Grundelemente einer Sensorvorrichtung mit selektiver Matrix;

Fig. 5 bis 7: Meßanordnungen zur Beugung;

Fig. 8: eine Meßanordnung zur Fluorimetrie;

Fig. 9: eine Meßanordnung zur Interferometrie;

Fig. 10: ein Brechungsindexprofil zu Fig. 9;

Fig. 11 bis 17: Meßanordnungen für ein Michelson-Interferometer;

Fig. 18 bis 20: den voraufgehenden Figuren entsprechende Wiedergabe zu einem Mach Zehnder Interferometer;

Fig. 21 bis 24: skizzenhafte Beispiele für das Einkoppeln und Auskoppeln von Wellen oder Strahlen mit erfindungsgemäßer Matrix;

Fig. 25 bis 28: andere Beispiele mit selektiver Matrix;

Fig. 29 bis 33: Beispiele unter Verwendung von Glasfasern.

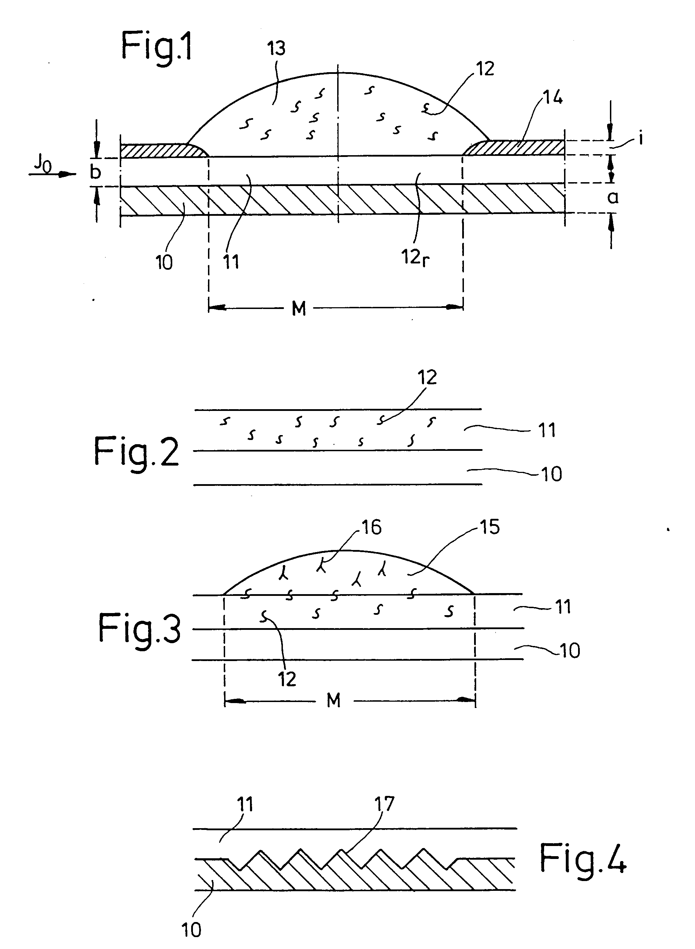

Gemäß Fig. 1 ruht auf einem Substrat 10 der Dicke a als wellenleitender film eine selektive Matrix 11 der Höhe b. Diese ist so geartet, daß sich einfallendes licht $I_o$ in dieser wellenleitenden Schicht über Totalreflexion ausbreiten kann; hierfür muß die Brechzahl der Matrix 11 zumindest ein Prozent größer sein als die Brechzahl des Substrates 10 sowie einer auf der Matrix 11 erkennbaren Meßsubstanz 13, in welcher eine -- durch S-förmige Symbole angedeutete -- zu messende Substanz 12 verteilt ist.

Die Meßsubstanz 13 ist von einer die Matrix 11 überlagernden Schutzschicht 14 der Dicke i (beispielsweise aus $SiO_2$) umgeben, welche einen Meßbereich M bestimmt.

Die selektive Matrix 11 bindet nur eine bestimmte Substanz chemisch, wobei die optischen Eigenschaften jener Matrix 11 verändert werden.

Diese Selektivität wird für den Nachweis von Subtanzen, welche beispielsweise eine wichtige Rolle in biochemischen Prozessen spielen -- d. h. niedrig molekulare Substanzen: wie Hormone; Vitamine; Medikamente; Haptene oder höhermolekulare Verbindungen: wie, Proteine, Nukleinsaüren und Kohlehydrate --, beispielsweise herbeigeführt durch den Einbau von Proteinen Nukleinsauren oder Derivate davon organischer Reaktionspartner $12_r$ in Fig. 1).

Der einbau der spezifischen organischen Reaktionspartner $12_r$ für eine bestimmte Substanz 12 in die wellenleitende Matrix 11 kann durch adsorbtive oder chemisorptive Binding aus homogener Lösung bzw. homogener Verteilung des organischen Reaktionspartners $12_r$ in der Matrixsubtanz vor oder nach der Matrixbildung erfolgen, kann aber auch durch chemische Bindungen zwischen reaktiven Gruppen der Matrisgrundsubstanz und des spezifischen organischen Reaktionspartners $12_r$ herbeigeführt werden.

Beispiele einer selektiven Matrix 11, welche den spezifischen organischen Reaktionspartner $12_r$ aus homogener Verteilung chemisorptiv oder adsorbtiv eingebaut enthält :
Polyacrylamidgele, die in Anwesenheit der spezifischen organischen Reaktionspartner $12_r$ (beispielsweise Protein) auf dem Substrat 10 zur Polymerisation gebracht wurden: Agarosegele, die in Anwesenheit der spezifische Reaktionspartner auf dem substrat 10 gelliert wurden; ebenso weitere Polymere die entsprechende Eigenschaften aufweisen.

Beispiel einer selektiven Matrix 11, die den spezifischen organischen Reaktionspartner durch chemische Bindungen eingebaut enthält:
Die Matrixgründsubstanz wird zunächst durch Einführung von sogenannten reaktiven Gruppen verändert. Letztere gehen in der Folge mit dem spezifischen organischen Reaktionspartner $12_r$ oder einem Derivat davon chemische Bindungen ein und werden somit durch chemische Bindung Bestandteil der Matrixgrundsubstanz. Diese selektive Matrix 11 kann direkt oder mit gelierfähigem oder polymerisierbaren Substanzen (beispielsweise Agarose, Polyacrylamid,usw.) zusammen als dünne homogene Schicht auf dem Substrat 10 zur Gelierung bzw. Polymerisation gebracht werden.

Zu beiden beschriebenen Beispielsgruppen -- aber auch bei anderen Beispielen -- können Pulver durch Pressen bzw. durch elektrostatisches Aufspritzen lichtdurchlässig als filmförmig dünne wellenleitende Matrix 11 aufgetragen. werden.

Gemäß Fig. 1 kann die Substanz 12 auch in der selektiven Matrix 11 der Höhe b selbst verteilt sein.

Im Ausführungsbeispiel nach Fig. 3 it im Meßbereich M die selektive Matrix 11 durch eine -- Antikörper 16 enthaltende -- selektive Zusatzschicht 15 überdeckt, die eine Detektion dort ermöglischen soll, wo Anordnungen nach Fig. 1,2 gegebenenfalls nicht ganz ausreichen.

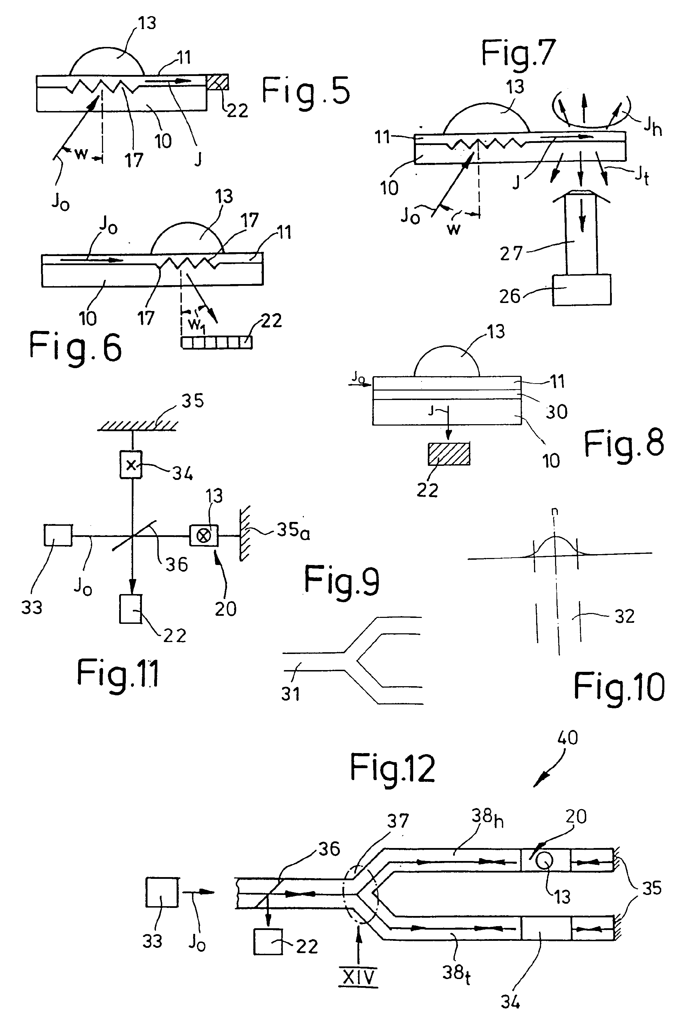

Bei einer anderen Ausführung ,nach Fig. 4 ist im Grenzbereich zwischen Matrix 11 und Substrat 10 ein Beugungsgitter 17 vorgesehen. Dieses wird auf der Substratoberfläche -- oder in bzw. auf der Matrix 11 -- beispielsweise durch ein Aufguß-Abzurgverfahren hergestellt. Auch können ein photolithographisches Verfahren verbunden mit bekannten Ätztechniken und Laser-, bzw. Elektronen- oder Ionenstrahlen-Verfahren Anwendung finden.

Die beschriebenen Beispiele der Fig. 1 bis 4 bieten jeweils eine selektive Matrix 11 mit oder ohne integriertem Beugungsgitter 17 an. Zu beiden dieser Anwendungsfälle kann gegebenenfalls die selektive Zusatzschicht 15 hinzutreten.

Die selektive Matrix 11 leitet eingekoppelte Laserstrahlen durch Totalreflexion mit einer Ausbreitungsge-

4

schwindigkeit (Lichtgeschwindigkeit durch effektive Brechzahl)des in Wellenleiter geführten sogenannten Modes. Eine Veränderung am wellenleitenden Medium -- beispielsweise durch jene Zusatzschicht 15, welche die Höhe b der Matrix 11 vermehrt -- bedingt eine Änderung jener effektiven Brechzahl N.

Eine so erzielte Änderung der effektiven Brechzahl N wird dann detektiert, beispielsweise mit eine Meßanordnungen zur Betrachtung der Beugung gemäß den Fig. 5 bis 7. Der eingehende Laserstrahl ist mit $I_o$ bezeichnet, der ausgehende Strahl mit I. Mit w bzw. $w_1$ sind Einfall- bzw. Ausfallwinkel angegeben. In Fig. 7 gehen vom austretenden Strahl I zum einen Strahlen $I_t$ durch Glasfasern 27 zu einem Fotomultiplier 26 als bevorzugten Detektor, Strahlen $I_h$ nach oben entstehen nur dann, wenn keine Schutzschicht 14 vorhanden ist.

Zur Messung der optischen Dichte mit einer selektiven Matrix 11 ohne Beugungsgitter 17 wird ein Lichtstrahl $I_o$ horizontal durch die Matrix 11 geschickt, der austretende Strahl I gelangt zu einem Detektor.

Bei einer etwa der Fig. 5 ohne Beugungsgitter 17 entsprechenden Meßanordnung wird für die Polarisation entweder mit selektiver Matrix 11 ohne Beugungsgitter 17 der ausgehende Strahl I vor dem Detektor durch einen Analysator geführt, wobei hier der polarisierte Eingangsstrahl I parallel zu dem Substrat 10 durch die Matrix 11 geleitet wird.

Für die soeben erwähnten Beispiele (selektive Matrix 11 ohne Beugungsgitter 17 -- mit oder ohne Zusatzschicht 15) gilt auch eine -- nicht dargestellte -- Meßanordnung zur Nephelometriemessung. Dort wird der Strahl $I_o$ ebenfalls parallel zum Substrat 10 durch die Matrix 11 geführt und nach dem Austritt aus dieser einer Streulichtmessung unterzogen. Ist der ausgehende Strahl I um 90° umgelenkt, kann er durch eine Glasfaser 27 zu einem Fotomultiplier 26 geführt werden.

Fig. 8 gibt eine Meßanordnung zur Fluorimetrie wieder, bei der -- ebenfalls für die zwei genannten Anwendungsfälle -- zwischen Matrix 11 und Substrat 10 ein Filter 30 verläuft, bevorzugt ein Monochromat- oder Interferenzfilter. Letzteres kann,auch mit dem Substrat 10 zusammenfallen. Der einkommende Strahl $I_o$ ist ein einfacher Lichtstrahl der Wellenlänge $lambda_1$, der emmittierte Lichtstrahl I hat die Wellenlänge $lambda_2$.

Eine Meßanordnung für Interferometrie weist ein wellenleitendes Medium 31 gabelförmiger Draufsicht auf, dessen Sensor im Querschnitt nach oben hin eine selektive Schicht aufweist und nach unten hin eine nicht selektive Referenzschicht. Das Umfeld des Mediums 31 hat keine oder sehr geringe optische Leitfähigkeit; das Brechungsindexprofil ist näherungsweise in Fig. 10 dargestellt, in welcher 32 einen Wellenleiter bedeutet.

Fig. 11 zeigt ein Michelson-Interferometer bekannter Bauart mit einem Lasergerät 33, einem Referenzteil 34 sowie Spiegeln $35,35_a$. An der Kreuzungsstelle des vom Lasergerät 33 ausgehenden Eingangsstrahles $I_o$ und des zum Detektor 22 verlaufenden Strahles ist ein halbdurchlässiger Spiegel 36 vorgesehen. Neu ist hier, daß der erfindungsgemäße Sensor 20 mit der Meßsubstanz 13 auf dem Strahl $I_o$ nach dem halbdurchlässigen Spiegel 36 vorgesehen ist.

Eine mögliche integrierte Struktur zeigt Fig. 12, wobei Pfeil XIV auf einen Bereich hindeutet, in welchem ein sogenannter beam splitter 37 untergebracht ist - dieser ist bekannt und aus Gründen der Übersichtlichkeit nicht näher dargestellt. In einem Arm $38_h$ der Vorrichtung 40 befindet sich der erfindungsgemäße Sensor 20 mit der Meßsubstanz 13, im anderen Arm $38_t$ der Referenzteil 34, ein Kompensator. Beide Zweigarme $38_h,38_t$ gehen von einem Hauptarm 38 aus und sind endwärts durch Spiegel 35 geschlossen.

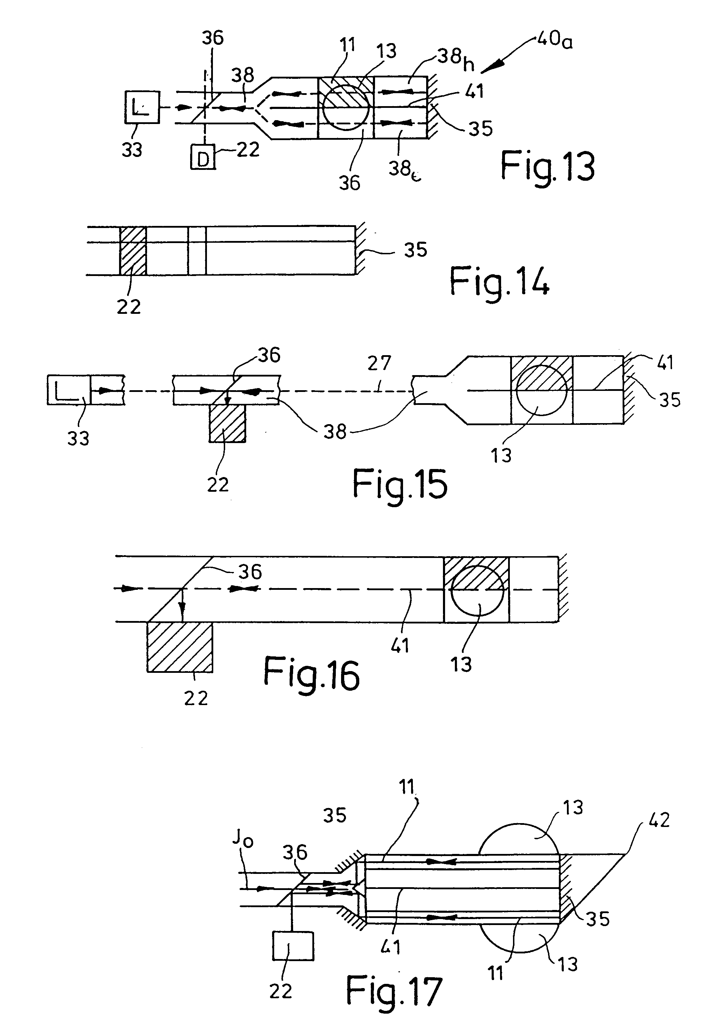

Abwandlungen der vorrichtung 40 zeigen die Fig. 13 bis 16, wobei in Fig. 13 zwischen den beiden Zweigarmen $38_h,38_t$ eine Trennwand 41 verläuft, welche von der Meßstubstanz 13 durchdrungen ist. Die Vorrichtung $40_a$ der Fig. 13 ist Teil der Fig. 15, wobei in letzterer zwischen dem rechtsliegenden Kopf und dem halbdurchlässigen Spiegel 36 ein verhältnismäßig großer Zwischenraum ist, der beispielsweise durch Glasfasern 27 überbrückt ist. Eine entsprechende Vorrichtung ohne sich verjüngendem Hauptarm 38 zeigt Fig. 16.

Fig. 17 läßt in Seitenansicht die Vorrichtung der Fig. 15,17 deutlich werden, vor allem die selektive Schicht 11, die Trennwand 41 und die Meßsubstanz 13. Mit 42 ist eine gegebenenfalls vorhandene Nadelspitze bezeichnet

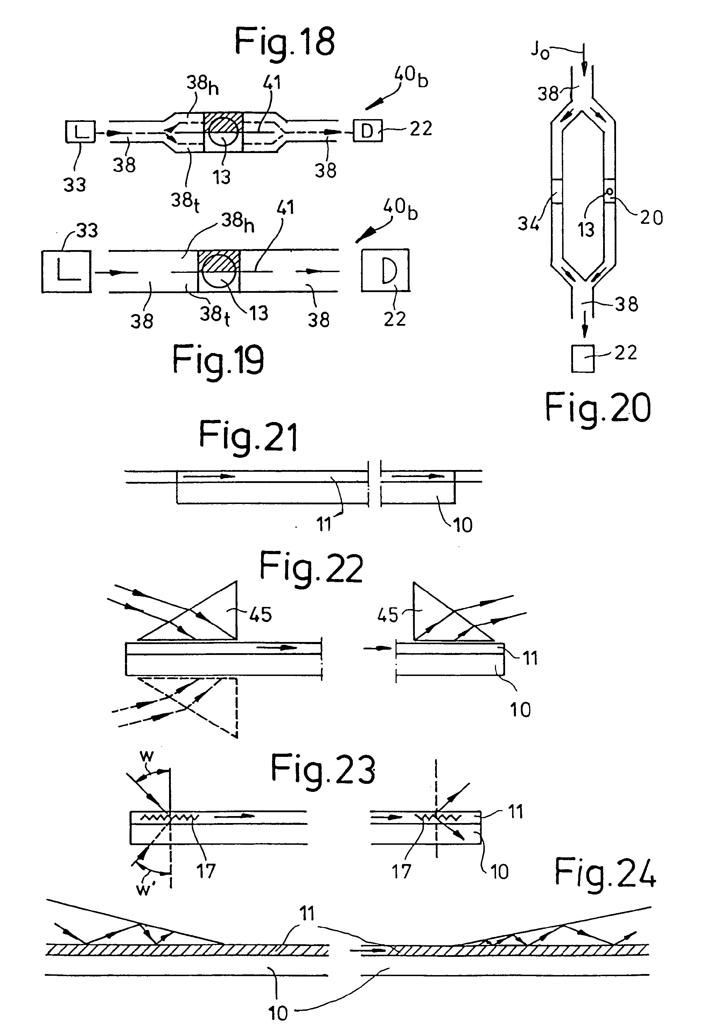

Die Fig. 18 und 20 bieten Ausführungsformen $40_b$ in Abwandlung zu Fig. 13,16 an; diese Vorrichtungen $40_b$ sind zwischen zwei Enden des Hauptarmes 38 mit den Zweigarmen $38_t$ und $38_h$ versehen, welche durch die bereits beschriebene Trennwand 41 voneinander getrennt sind. Auch hier durchgreift die Meßsubstanz 13 jene trennwand 41.

Um die erfindungsgemäße Sensorik anzuwenden, können auch folgende Interferometer Verwendung finden:
- Pohl Interferometer
- Sagnac Interferometer
- Fabry-Perot Interferometer
- Jamin Interferometer

Das Einkoppeln sowie das Auskoppeln der Wellen ist-beispielhaft in den Fig. 21 bis 23 wiedergegeben, und zwar in Fig. 21 eine Stirnflächeneinkopplung mit rechts erkennbarer Auskopplung. Fig. 22 zeigt eine Prismeneinkopplung mit zwei Prismen $45_a$ und zwei alternativen Strahlengängen (oberhalb bzw. unteehalb der Wellenleiter 11). Eine solche Alternative gibt auch Fig. 23 an einer Gittereinkopplung wieder.

Der Winkel w wird im übrigen so gewählt, daß eine maximale Intensität der angeregten Welle erreicht wird; w ist abhängig von der/den Beechzahl/en den am Wellenleiter beteiligten Medium.

Das Einkoppeln mit dem Tapered Film gibt Fig. 24 wieder, welche am rechten Zeichnungsrand das Auskoppeln erkennen läßt.

Durch die selektive Matrix 11 wird das Spektrum der Meßmöglichkeiten erheblich erweitert, insbesondere Beugung und Interferenz. Die Empfindlichkeit und die Geschwindigkeit des Meßverfahrens sind ebenfalls verbessert, da die Wechselwirkung unmittelbar im Wellenleiter erfolgt und nicht nur auf dessen Oberfläche.

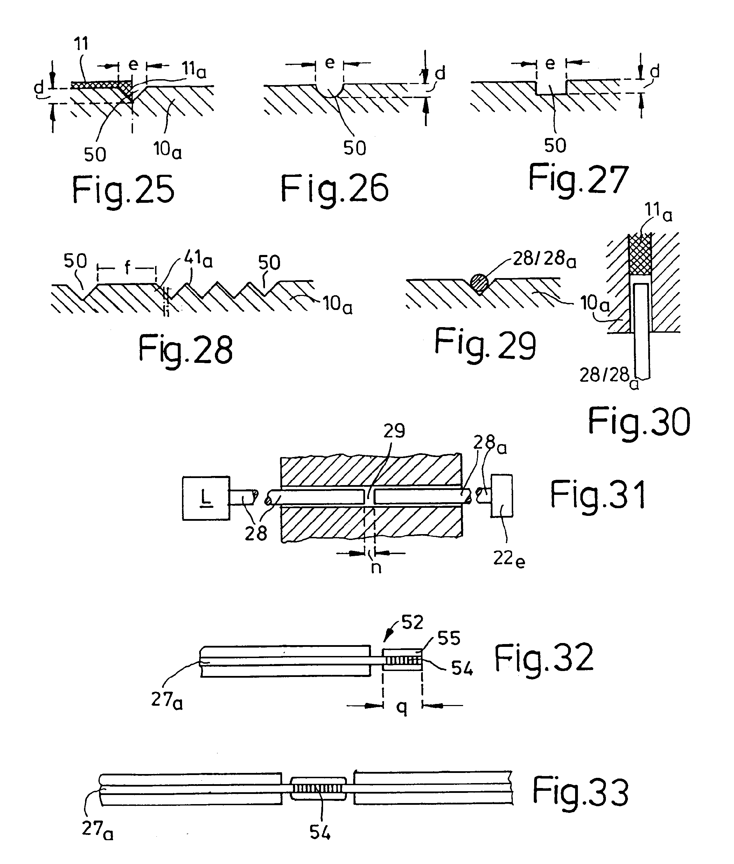

Bei den Ausführungsformen der Fig. 25 bis 27 sind statt der beschriebenen planaren Substratfläche auch Substrate $10_a$ -- bevorzugt $SiO_2$ in kristalliner Form -- mit querschnittlich V-, U- oder rechteckförmigen Einschnitten 50 dargestellt; Höhe d und Breite e dieser Einschnitte 50 messen weniger als 100 $\mu$. Sie sind mit großer Genauigkeit -- beispielsweise durch chemisches Ätzen -- herstellbar und mit wellenleitender selektiver Matrix $11_a$ gefüllt, die entsprechend Fig. 25 links, auch in eine plane Schicht 11 übergehen kann. Nicht wiedergegeben sind mögliche andere Querschnittsformen der Einschnitte 50, beispielsweise polygonale

Fig. 28 zeigt, daß die etwa zu Fig. 13 erwähnte Trennwand 41a zwischen jeweils zwei parallelen Einschnitten 50 in "natürlicher" Weise durch stehengebliebenes Substrat $10_a$ dargestellt werden kann. Der in Fig. 9 ff angedeutete wellenleitende Kanal wäre dann nicht planar sondern z. B. querschnittlich V-förmig. Das Brechungsindex-Profil nach Fig. 10 bleibt auch bei V-förmigem Einschnitt 50 i. w. unverändert. Fig. 28 zeigt links, daß der Einschnittabstand f auch verhältnismäßig groß sein kann.

Das weiter oben erwähnte Fabry-Perot-Interferometer läßt sich mit einem V-förmigen Einschnitt 50 besonders gut realisieren; man verwendet zwei Glasfaserabschnitte $28,28_a$, von denen einer von einer Lichtquelle L kommt und der andere zu einem Detektor $22_e$ führt. Die beiden einander gegenüberstehenden Faserstirnen 29 müssen sehr sauber und eben sein, da sie mit einer -- in der Zeichnung nicht erkennbaren -- halbdurchlässigen Silber- oder Aluminiumschicht versehen und in den V-förmigen Einschnitt 50 eines Substrat-Teilchens $10_a$ gelegt werden (Fig. 29,30).Diese Enden oder Stirnen 29 werden so zusammengeschoben, daß deren Abstand n in der Regel weniger als einen Millimeter beträgt. Dadurch entsteht eine kleine Kavität, in welche nun die in Fig. 31 nicht gezeigte selektive Matrix eingebracht werden kann. Beim Fabry-Perot Interferometer muß der Brechungsindex der selektiven Matrix nicht unbedingt größer sein als derjenige des Substrates. Die Glasfasern $28,28_a$ werden so ausgewählt, daß das System im Monomode betrieben werden kann.

Fig. 29 zeigt eine Faser $28/28_a$ aus Glas oder anderem Werkstoff in einem Einschnitt 50, in dem -- wie die Draufsicht nach Fig. 30 verdeutlicht -- eine Matrix $11_a$ lagert. Nicht dargestellt ist, daß selbstverständlich auch in den parallelen Einschnitten 50 der Fig. 28 -- dann parallel -- mehrere Fasern 28/28 bzw. spezifische Matrizen $11_a$ lagern können; diese sind bevorzugt entsprechend Fig. 13, 18 mit übergreifenden Meßsubstanzen 13 versehen.

Einige wellenleitende selektive Matrixmaterialien weisen eine so gute Festigkeit auf, daß sie auch ohne eine Art von Substrat existieren können, welches die umgebende Luft ist. Dabei soll diese Matrix insbesondere entveder als pläner Film oder als runder Faden ausgebildet sein. Als Ein- bzw. Auskopplung eignet sich besonders die Stirnkopplung oder kontaktfreie Prismenkopplung etwa an Glasfasern 28, $28_a$.

Bei einem weiteren Ausführungsbeispiel ist ein sehr empfindliches Sensorelement 52 mit einer ringförmigen periodischen Gitterstruktur 54 einer Dichte von beispielsweise 4800 Ringen pro Millimeter über eine länge q von mindestens 10 mm versehen. Die selektive Matrix wird im Gitterbereich 54 auf die Glasfaser $27_a$ aufgetragen. Die Detektion erfolgt über den Intensitätsverlust, der je nach Reaktionsverlauf mehr oder weniger stark ist. Glas wirkt als Bragg Reflektor.

## Patentansprüche

1. Chemosensor zum selektiven Nachweis zumindest einer Substanz (13) mittels einer selektiven Schicht an einem Substrat 10,$10_a$), bei dem die selektive Schicht ein dünner wellenleitender Film einer Dicke unter 50 $\mu$m aus einer selektiven, permeablen Matrix (11) ist, wobei die Selektivität des Matrix (11,$11_a$) durch homogene Dotierung mit dem entsprechenden, spezifischen organischen Reaktionspartner ($12_r$) gegeben ist, und in welcher durch Wechselwirkung der Reaktionspartner mit der Substant (13) die optischen Eingenschaften einer durch die Schicht geleiteten Welle veränderbar sind.

2. Chemosensor nach Anspruch 1, gekennzeichnet durch einen Einschnitt (50) mit einer Ausdehnung von 100 Mikron und kleiner in dem Substrat ($10_a$) zur Aufnahme der selektiven, permeablen Matrix ($11_a$).

3. Chemosensor nach Anspruch 1 oder 2, dadurch gekennzeichnet, daß in der selektiven Schicht die Welle geführt ist, deren optischen Charakteristika durch Diffusion der gasförmigen, flüssigen und/oder festen Substanz, auch in Lösungen und Gasen, veränderbar sind, wobei eine interferometrische Anordnung vorgesehen ist.

4. Chemosensor nach Anspruch 1 oder 2, dadurch gekennzeichnet, daß die optischen Characteristika der Welle durch Diffusion der gasförmigen, flüssigen und/oder festen Substanz, auch in Lösungen un Gasen, veränderbar sing, wobei die selektive Matrix ein Beugungsgitter (1) aufweist, bis zu dem oder von dem aus die Welle geführt ist.

5. Chemosensor nach Anspruch 1 oder 2, gekennzeichnet durch eine mikroporöse Matrix ($11,11_a$), deren Poren zumindest teilweise mit einer Zusatzschicht (15) gefüllt sind.

6. Chemosensor nach einem der Ansprüche 1 bis 5, dadurch gekennzeichnet, daß die Brechungszahl der Matrix ($11,11_a$) größer ist als die Brechungszahl des Substrates (10).

7. Chemosensor nach wenigstens einem des Ansprüche 1 bis 6, gekennzeichnet durch ein Polymer in der selektiven Matrix ($11,11_a$) insbesondere ein auf dem Substrat ($10,10_a$) in anwesenheit spezifischer organischer Reaktionspartner gebilden Polymer.

8. Chemosensor nach wenigstens einem der Ansprüche 1 bis 7, gekennzeichnet durch eine Matrix ($11,11_a$) aus Pulver.

9. Chemosensor nach Anspruch 8, dadurch gekennzeichnet, daß die Matrix ($11,11_a$) durch Pressen bzw. Aufspritzen lichtdurchlässig als dünner wellenleitender Film aufgetragen ist.

10. Chemosensor nach einem der Ansprüche 2 bis 9, dadurch gekennzeichnet, daß im Einschnit (50) des Substrates ($10_a$) eine wellenleitende Faser ($27,28,28_a$) zumindest teilweise untergebracht ist.

11. Chemosensor nach einem der Anspruche 1 bis 10, gekennzeichnet durch wenigskun eine querschnittlich U-förmige oder polygone, insbesondere eine dreiecksförmige oder rechteckigen selektive Matris ($11_a$), die gegebenenfalls von einem wellenleitenden Film überspannt ist.

12. Chemosensor nach Anspruch 2 oder 11, dadurch gekennzeichnet, daß im Einschnitt des Substrates ($10_a$) eine Glasfaser ($27,28,28_a$) in ein selektiv wellenleitendes Material eingebettet ist, das den Einschnitt ausfüllt.

13. Chemosensor nach Anspruch 2, 10 oder 12, dadurch gekennzeichnet, daß mehrere Einschnitte (50) nebeneinander angeordnet und zwischen diesen Trennwände ($41_a$) des Substrates ($10_a$) forgesehen sind.

14. Chemosensor nach wenigstens einem der Ansprüche 2 bis 13, dadurch gekennzeichnet, daß im einschnitt (50) einander die Stirnflächen (29) zweier Glasfasern ($28, 28_a$) in geringem Abstand (n) gegenüberliegen, von denen eine an eine Lichtquelle (L), die andere an einen Detektore ($22_e$) angeschlossen sowie zwischen die Stirnfläche die selektive Matrix eingebracht ist.

15. Chemosensor nach einem der Ansprüche 10 bis 14, gekennzeichnet durch eine ringförige periodische Gitterstruktur (55) einer wellenleitenden Faser wobei gegebenenfalls eine ringförmige Gitterstruktur (55) aus zumindest 450 Ringen je Millimeter Länge, bevorzugt etwa 4500 bis 4800 Ringen/mm, vorgesehen ist, die sich über einen Bereich von wenigstens 10 mm erstreckt.

## Claims

1. Chemosensor for the selective detection of at least one substance (13) by means of a selective layer on a substrate (10, $10_a$), in which the selective layer is a thin waveguide film having a thickness of less than 50 μm and consisting of a selective permeable matrix (11), the selectivity of the matrix (11, $11_a$) being provided by homogeneous doping with the appropriate specific organic reactant ($12_r$), and in which the optical properties of a wave guided through the layer can be changed by interaction of the reactant and the substance (13).

2. Chemosensor according to claim 1, characterised by a recess (50) in the substrate ($10_a$), having dimensions of 100 microns or less, for receiving the selective permeable matrix ($11_a$).

3. Chemosensor according to claim 1 or claim 2, characterised in that the wave is guided in the selective layer, and its optical characteristics can be changed by diffusion of the gaseous, liquid and/or solid substance, even when present in solutions and gases, an interferometric arrangement being provided.

4. Chemosensor according to claim 1 or claim 2, characterised in that the optical characteristics of the wave can be changed by diffusion of the gaseous, liquid and/or solid substance, even when present in solutions and gases, the selective matrix having a diffraction grating (1) to or from which the wave is guided.

5. Chemosensor according to claim 1 or claim 2, characterised by a microporous matrix (11, $11_a$), the pores of which are at least partially filled with a supplementary layer (15).

6. Chemosensor according to one of claims 1 to 5, characterised in that the refractive index of the matrix (11, $11_a$) is higher than the refractive index of the substrate (10).

7. Chemosensor according to at least one of claims 1 to 6, characterised by a polymer in the selective matrix (11, $11_a$), especially a polymer formed on the substrate (10, $10_a$) in the presence of specific organic reactants.

8. Chemosensor according to at least one of claims 1 to 7, characterised by a matrix (11, $11_a$) of powder.

9. Chemosensor according to claim 8, characterised in that the matrix (11, 11$_a$) is applied in a transparent manner in the form of a thin waveguide film by pressing or spraying.

10. Chemosensor according to one of claims 2 to 9, characterised in that a waveguide fibre (27, 28, 28$_a$) is at least partially housed in the recess (50) in the substrate (10$_a$).

11. Chemosensor according to one of claims 1 to 10, characterised by at least one selective matrix (11$_a$) having a U-shaped or polygonal cross section, especially a triangular or rectangular cross section, optionally traversed by a waveguide film.

12. Chemosensor according to claim 2 or claim 11, characterised in that, in the recess of the substrate (10$_a$), a glass fibre (27, 28, 28$_a$) is embedded in a selective waveguide material which fills the recess.

13. Chemosensor according to claim 2, claim 10 or claim 12, characterised in that several recesses (50) are arranged alongside one another and partitions (41$_a$) of the substrate (10$_a$) are provided therebetween.

14. Chemosensor according to at least one of claims 2 to 13, characterised in that the end faces (29) of two glass fibres (28, 28$_a$) are situated at a short distance (n) from one another in the recess (50), one being connected to a light source (L) and the other to a detector (22$_e$), and the selective matrix being inserted between the end faces.

15. Chemosensor according to one of claims 10 to 14, characterised by an annular periodic lattice structure (55) of a waveguide fibre, an annular lattice structure (55) having at least 450 rings per millimetre of its length, preferably approximately 4500 to 4800 rings/mm optionally being provided, said rings extending over an area of at least 10 mm.

## Revendications

1. Capteur chimique destiné à la détection sélective d'au moins une substance (13) à l'aide d'une couche sélective sur un substrat (10, 10$_a$) dans lequel la couche sélective est un film mince formant guide d'ondes, ayant une épaisseur inférieure à 50 μm et constitué d'une matrice perméable sélective (11, 11$_a$) dont la sélectivité est définie par un dopage homogène à l'aide d'un produit réactif organique spécifique correspondant (12$_n$) et dans laquelle, grâce à une interaction des produits réactifs avec la substance (13), on peut modifier les propriétés optiques d'une onde guidée par la couche.

2. Capteur chimique selon la revendication 1, caractérisé par une entaille (50) ayant une étendue de 100 μm ou moins, aménagée dans le substrat (10$_a$) destinée à recevoir la matrice sélective perméable (11$_a$).

3. Capteur chimique selon la revendication 1 ou 2, caractérisé en ce que dans la couche sélective est guidée une onde dont les caractéristiques optiques peuvent être modifiées par diffusion de la substance gazeuse, liquide et/ou solide, même dans des solutions et des gaz, un montage interférométrique étant prévu.

4. Capteur chimique selon la revendication 1 ou 2, caractérisé en ce que les caractéristiques optiques de l'onde peuvent être modifiées par diffusion de la substance gazeuse, liquide et/ou solide, même dans des solutions et des gaz, la matrice sélective comportant un réseau de diffraction (1) jusqu'auquel ou à partir duquel est guidée l'onde.

5. Capteur chimique selon la revendication 1 ou 2, caractérisé par une matrice micro-poreuse (11, 11$_a$) dont les pores sont, au moins en partie, remplis d'une couche supplémentaire (15).

6. Capteur chimique selon l'une des revendications 1 à 5, caractérisé en ce que l'indice de réfraction de la matrice (11, 11$_a$) est supérieur à l'indice de réfraction du substrat (10).

7. Capteur chimique selon au moins l'une des revendications 1 à 6, caractérisé par un polymère dans la matrice sélective (11, 11$_a$), en particulier un polymère formé sur le substrat (10, 10$_a$) en présence de produits réactifs organiques spécifiques.

8. Capteur chimique selon au moins l'une des revendications 1 à 7, caractérisé par une matrice (11, 11$_a$) constituée d'une poudre.

9. Capteur chimique selon la revendication 8, caractérisé en ce que la matrice (11, 11$_a$) est appliquée par pressage ou pulvérisation, d'une manière transparente, sous forme d'un film mince formant guide d'ondes.

10. Capteur chimique selon l'une des revendications 2 à 9, caractérisé en ce qu'une fibre formant guide d'ondes (27, 28, 28$_a$) est, au moins en partie, logée dans l'entaille (50) du substrat (10$_a$).

11. Capteur chimique selon l'une des revendications 1 à 10, caractérisé par au moins une matrice sélective (11$_a$), ayant en coupe une forme en U ou polygonale, en particulier triangulaire ou rectangulaire, éventuellement recouverte d'un film formant guide d'ondes.

12. Capteur chimique selon la revendication 2 ou 11, caractérisé en ce qu'une fibre de verre (27, 28, 28$_a$) est, dans l'entaille du substrat (10$_a$), incorporée dans un matériau formant guide d'ondes sélectif, qui remplit l'entaille.

13. Capteur chimique selon la revendication 2, 10 ou 12, caractérisé en ce qu'on prévoit plusieurs entailles (50) disposées les unes à côté des autres et, entre ces dernières, des séparations (41$_a$) du substrat (10$_a$).

14. Capteur chimique selon au moins l'une des revendications 2 à 13, caractérisé en ce que, dans l'entaille (50), les surfaces frontales (29) de deux fibres de verre (28, 28$_a$) s'opposent l'une l'autre à une faible distance (n) dont l'une est raccordée à une source lumineuse (L) et l'autre à un détecteur (22$_e$), la matrice sélective étant logée entre les surfaces frontales.

15. Capteur chimique selon l'une des revendications 10 à 14, caractérisé par une structure de réseau périodique annulaire (55) d'une fibre formant guide d'ondes, auquel cas on prévoit éventuellement une structure de réseau annulaire (55) constituée d'au moins 450 anneaux/mm de longueur, de préférence d'environ 4.500 à 4.800 anneaux/mm, et qui s'étend sur une zone d'au moins 10 mm.

Fig.1

Fig.2

Fig.3

Fig.4

Fig.5

Fig.6

Fig.7

Fig.8

Fig.9

Fig.10

Fig.11

Fig.12

Fig.13

Fig.14

Fig.15

Fig.16

Fig.17

12

# Fig.18

# Fig.19

# Fig.20

# Fig.21

# Fig.22

# Fig.23

# Fig.24

13

Fig.25

Fig.26

Fig.27

Fig.28

Fig.29

Fig.30

Fig.31

Fig.32

Fig.33